# EUROPEAN PATENT SPECIFICATION

(11) **EP 3 648 917 B1**
(45) Date of publication and mention of the grant of the patent: **01.06.2022**
(21) Application number: 18880037.9
(22) Date of filing: 03.07.2018
(51) Int. Cl.: B22F 10/28, B22F 12/70, F15D 1/00, B33Y 30/00, F24F 13/08, F15D 1/04

(54) **BLOWING SYSTEM FOR BUILD CHAMBERS**
BLASVORRICHTUNG FÜR BAUKAMMERN
SYSTÈME DE SOUFFLAGE POUR CHAMBRES DE CONSTRUCTION

(30) Priority: 04.07.2017 TR 201709860
(43) Date of publication of application: 13.05.2020
(73) Proprietor: Ermaksan Makina Sanayi Ve Ticaret Anonim Sirketi, Nilufer/Bursa (TR)
(72) Inventor: YURTKURAN, Emre, Sivas (TR); UNAL, Rahmi, Ankara (TR); PITIR, Fatih, Bursa (TR)
(74) Representative: Yamankaradeniz, Kemal
(86) International application number: PCT/TR2018/050340
(87) International publication number: WO 2019/117831

(56) References cited:
- WO-A2-2018/128695
- CN-A- 106 623 928
- CN-B- 106 623 928
- US-A1- 2012 015 598
- WANG WEI-CHENG ET AL: "Flow analysis of the laminated manufacturing system with laser sintering of metal powder. Part I: flow uniformity inside the working chamber", THE INTERNATIONAL JOURNAL OF ADVANCED MANUFACTURING TECHNOLOGY, SPRINGER, LONDON, vol. 92, no. 1, 10 March 2017 (2017-03-10) , pages 1299-1314, XP036297416, ISSN: 0268-3768, DOI: 10.1007/S00170-017-0213-5 [retrieved on 2017-03-10]

## Description

### Technical Field

The invention is related to three-dimensional build chambers based on metal powder spreading based laser melting/sintering.

The invention is particularly related to blowing systems which provide for creating the gas flow which is useful for removing the gasses generated during the melting and sintering procedures from the powder layer in three-dimensional build chambers at optimum velocities and in a laminar flow.

### Prior Art

Some of the three-dimensional manufacturing methods used today are based on powder spreading. In this method, the powder layer generally chosen from metal material is spread on the manufacture platform and then heated by exposing to laser beams in the manufacture process. In this stage also called sintering, the heated particles fuse and produce the part. Various gasses are formed during the melting/sintering. As these gasses interact with the material and reduce quality, they prevent the process. Therefore, evacuating and removing the gasses as soon as they are formed from the build chamber is an important issue. In the known applications, circulation systems developed in order to remove the gasses formed from the part manufacturing chamber in order to avoid negative effects are present.

In the Chinese patent document number CN106041080 titled 'Powder material laser-sintering forming device', a sintering device is described. In the subject application, the undesirable gasses are removed by the gas flow formed on the manufacturing platform by means of the blowpipe and evacuated by flue.

In another patent document that numbered CN106623928A, is mentioned a device for entering and exiting of shielding gas on two sides of a forming bin of metal 3D printing equipment. The device is mainly designed to enable gas flow to form stable laminar flow and effectively blow away the black smoke and metal vapor plasma produced during laser sintering of the powder, the laser energy utilization rate can be increased by about 10%-15%, the quality and the precision of the formed parts can be improved effectively, and the density of the formed parts approaches 100%.

The device is composed of an air inlet device and an air outlet device. The devices are placed in parallel and oppositely in the forming chamber. The airflow of the air inlet device is divided into upper and lower layers, and the upper and lower flow channels are separated by partitions.The purpose of the intake layer is divided into two layers to obtain a laminar flow that is more suitable for blowing away black smoke. Said device does not comprise a protrusion which is at the top part of an absorption port and formed so as to extend outwards from the absorption port, which enables the gasses to be delivered to an exit chamber without them being circulated in a cabin.

In the gas circulation systems of the build chambers in most known applications, the gas entrance to the manufacturing area is provided by the grate plates having fixed perforations. The gas output from these sections exit at approximately equal velocities and advance to the exit channel by moving on the spread powder layer. The gas flow advancing on the powder layer spread onto the manufacturing platform on a particular velocity can move very small powders. The high velocity of gas flow above the powder layer harms the powder layer spread and may cause a negative situation. In addition, partial turbulence may occur in the gas because of the velocity. If low velocities are applied in order to prevent the gas flow harming to the powder layer spread, this low velocity may cause issues which the undesirable gasses wanted to be removed. The insufficiency of the absorption capacity of the gas exit chamber of the closed cycle gas circulation system and the irregularity of the gas flow may fall short canalising all the gasses wanted to be removed to the exit.

Consequently, the necessity for the blowing systems which provide for creating the gas flow which is useful for removing the gasses generated during the melting and sintering procedures from the powder layer in three-dimensional build chambers at optimum velocities and in a laminar flow and the insufficiency of the present solutions requires an improvement in the related technical field.

### The Purpose of the Invention

The present invention is related to a blowing system according to claim 1 which meets the above-mentioned necessities, eliminates all the disadvantages and brings some additional advantages.

The main purpose of the blowing system subject to the application is developing a system which creates different velocities of gas flow from low to high on the powder layer spread in the gas circulation system. In developing this system, in order to differentiate the flow rates of the gas entering to the build chamber at the intended ratios, an entry chamber in which at least two perforated plates having different diameters are aligned in parallel is used. In the vertical direction, on the lowest tier there is a small perforation diameter and, on the top, there are larger perforation diameters. Likewise, the diameters of the perforations geometrically increase to be larger on each tier from bottom to top. As the golden ratio can be applied to this increase, the desired rate differences can be obtained using different ratios according to need.

Another purpose of the invention is to create small cells in the entry chamber by means of the end plates positioned between the perforated plates and providing that the gas exits from the perforations equally. This way, while making contribution to the laminar flow, the turbulence in the gas outlet is not allowed.

Another purpose of the invention is to enable regular flow in taking the gas entering the build chamber from the entry chamber to the outside of the build chamber in the closed cycle by placing impellers throughout the exit chamber in which the air is absorbed to the exit pipes. This way, the gas is removed without facing any obstruction from the build chamber and without allowing its return.

According to the present invention, the gas is collected from the build chamber entirely by means of the protrusion in the opening and the inclined surface created at the top of the exit chamber. This way, the absorption without disrupting the laminar pattern of the gas flow is rendered possible.

In order to achieve the above-mentioned purposes in the most general sense, the present invention is a blowing system which provides for removing the gasses created during the melting and sintering procedures from the manufacturing area with the help of the gas flow created between the entry chamber which is fed by an entry line and which has a perforated front plate on the blowing port and a rear plate to which the entry line is connected, and the exit chamber which has an absorption port and which is positioned against the entry chamber; wherein the entry chamber comprises a least one front plate having at least two tiers of perforations which are positioned on the blowing port side, which have variable diameters as per the chamber axis and which are parallel to the manufacturing area is obtained. The exit chamber comprises at least one protrusion which is at the top part of the absorption port and formed so as to extend outwards from the absorption port, which enables the gasses to be delivered to the exit chamber without them being circulated in the cabin.

The structural and characteristic features and all of the advantages of the invention will be understood more clearly by means of the figures in the following and the detailed description written by making references to these figures and thus, the evaluation should be made in consideration of these figures and the detailed description.

### Figures Illustrating the Invention

In order for the embodiment and the advantages of the invention to be understood in the best manner with the additional elements, the same should be evaluated in consideration of the figures whose descriptions are given below.
Figure - 1: The general perspective view of the build chamber in which the blowing system of the invention takes place.
Figure - 2: The side lateral sectional view of the build chamber in which the blowing system of the invention takes place.
Figure - 3a: The perspective view of the side section entry chamber which takes place in the blowing system of the invention.
Figure - 3b: The frontal view of the intermediate plate which takes place in the blowing system of the invention.
Figure - 4: The perspective view of the top cross-section of the entry chamber which takes place in the blowing system of the invention.
Figure - 5: The perspective view of the top cross-section of the exit chamber which takes place in the blowing system of the invention.

**Part References**

| | | | |
|---|---|---|---|
| 10 | Build chamber | 37 | Partition |
| 11 | Powder layer | 40 | Exit chamber |
| 12 | Cabin | 41 | Exit line |
| 20 | Blowing system | 42 | Inclined surface |
| 21 | Gas flow | 43 | Protrusion |
| 30 | Entry chamber | 44 | Impeller |
| 31 | Entry line | 45 | Absorption port |
| 32 | Front plate | 46 | Evacuation port |
| 32a | Blowing port | x | Chamber axis |
| 33 | Intermediate plate | a | Bottom |
| 34 | Perforation | b | Top |
| 35 | Partition plate | c | Tier |
| 36 | Rear plate | | |

### Detailed Description of the Invention

The following embodiments and figures are present only for illustration purposes.

As in the three-dimensional build chambers, in the build chambers (10) which provide additive manufacturing, gas formation is observed in the cabins (12) in which the melting and sintering procedures are carried out and which have a generally closed structure. These gasses which are undesired, and which effect the production adversely are removed from the manufacturing area in which the production takes place with the help of the gas flow (21) created between the entry chamber (30) fed by an entry line (31) and the exit chamber (40) positioned against the entry chamber (30). In the known applications having the above-mentioned structure in general, the blown gas is supplied to the cabin (12) by being drained from the plates which have perforated structure. When the gas flow created in here has a high velocity, it lifts the powder layer (11) in the manufacturing area and when it has a low rate, an efficient removal of smoke cannot be provided.

The invention is a blowing system (20) in cabins (12) of build chambers (10) which provides for removing the gasses created during the melting and sintering procedures from the manufacturing area with the help of the gas flow (21) created between the entry chamber (30) which is fed by an entry line (31) and which has a perforated (34) front plate (32) on the blowing port (32) and a rear plate (36) to which the entry line (31) is connected, and the exit chamber (40) which has an absorption port (45) and which is positioned against the entry chamber (30); wherein the entry chamber (30) comprises a least one front plate (32) having at least two tiers (c) of perforations (34) which are positioned on the blowing port (32a) side, which have variable diameters as per the chamber axis (x) and which are parallel to the manufacturing area.

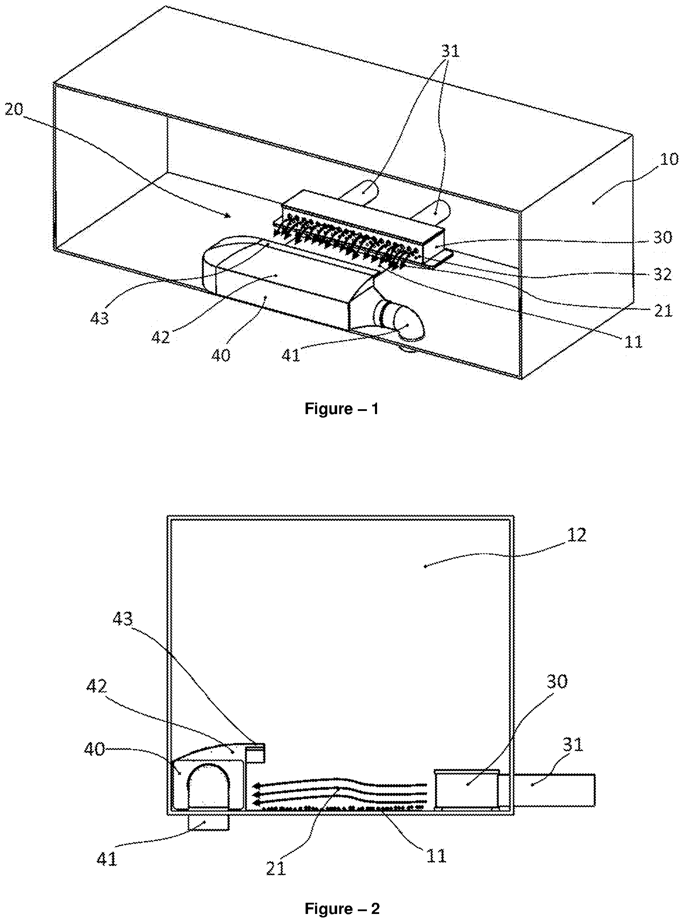

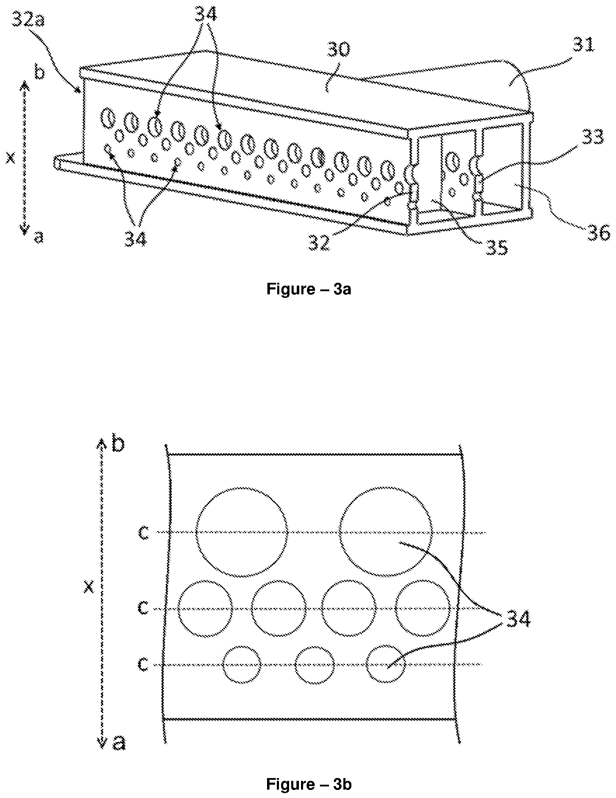

In Figure 1 and Figure 2, the perspective and side views of the build chamber (10) in which the subject blowing system (20) takes place respectively. In the subject blowing system (20), as distinct from the present art, there is at least one front plate (32) which comprises at least two tiers (c) of perforations (34) which is positioned on the blowing port (32a) of the entry chamber (30), which has variable diameters as per the chamber axis (x) and which is parallel to the manufacturing area. In the preferred embodiment, perforations (34) in 3 tiers (c) take place on the front plate (32) and the diameters of these perforations (34) increase from bottom (a) to top (b). The subject increase can be observed in Figure 3b. In this manner, the variety of the gas flow (21) velocities is aimed, and it is provided that the highest velocity is provided on the topmost (b) and the lowest velocity lowermost (a). In one embodiment of the system, the increase in the perforation (34) diameters is applied as per the golden ratio.

In Figure 3a, the perspective view of the side cross-section of the entry chamber (30) takes place. In between the front plate (32) and the rear plate (36) which the entry line (31) is connected, at last one intermediate plate (33) is positioned which have perforations (34) having the same or different diameter and alignment with the front plate (32). Similarly, to the front plate (32), perforations (34) in three tiers (c) take place on the intermediate plate (33) and their diameters increase from the bottom (a) to top (b). This way, it is prevented that the gas faces turbulence between the front plate (32) and the intermediate plate (33) and it is provided that the gas flow (21) is regular and laminar flow. Therefore, it is prevented that the gas flow (21) harms the metal powder layer (11) spread onto the manufacturing area. The identical front plate (32) and the intermediate plate (33) are placed into the entry chamber at a particular distance.

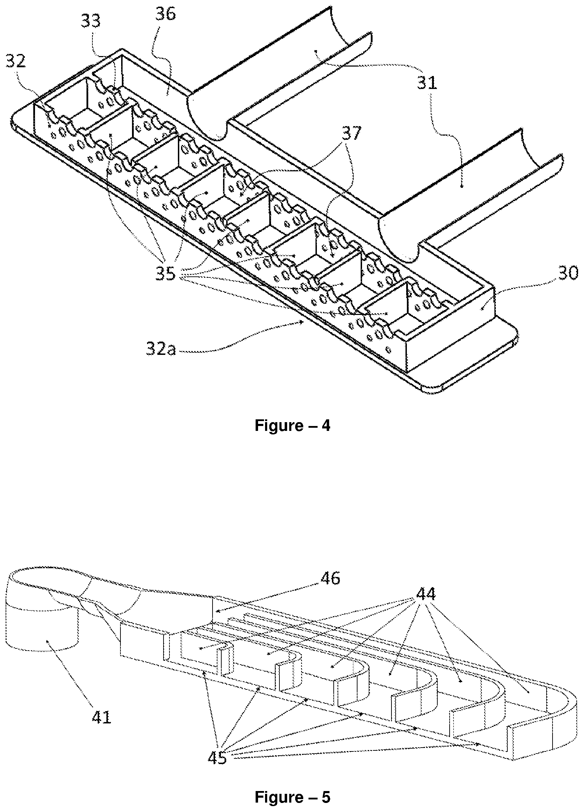

In the preferred embodiment, the partition plates (35) positioned between the front plate (32) and the intermediate plate (33) or between the front plate (32) and the rear plate (36) in the cases where the intermediate plate (33) is not used separate the entry chamber (30) into partitions (37). As can be seen in Figure 4, the partition plates (35) form equal partitions (37) within the entry chamber (30) and provide for the gas to be distributed equally inside and to exit at close velocities from the perforations (34) on the same tier (c). The partition plates (35) and partitions (37) are only defined to be useful for highlighting the specific embodiment of the preferred system.

The perspective view of the top cross-section of the exit chamber (40) which provides for the absorption of the gas flow (21) and the other gasses from the cabin (12) takes place in Figure 5. A large number of impellers (44) reach out between the absorption port (45) of the exit chamber (40) which provides gas absorption and the evacuation port (46) which provides for the absorbed gas to be discharged. The impellers (44) having particular bending diameters provide regular flow in taking the gas entering the cabin (12) atmosphere from the entry chamber (30) to the outside of the cabin (12) in closed cycle. The exit line (41) connected to the evacuation port (46) of the exit chamber (40) provide for removing the absorbed gas and carrying the same to the desired region. The inclined surface (42) which is created at the top part of the exit chamber (40) and which provides regular flow in gas absorption makes the regular gas flow in the exit chamber (40) possible and prevents turbulence because of it does not involve sharp surfaces. At the top part of the absorption port (45) of the exit chamber (40), the protrusion (43) created in the way to slope outwards from the absorption port (45) fulfils the duty of taking the gasses into the exit chamber (40) without circulating in the cabin (12). With the purpose of providing the regularity of the flow, the vertical section of the exit chamber (40) is formed so as to become narrow from the absorption port (45) to the evacuation port (46). The impellers (44), the exit line (41) and the inclined surface (42) are only defined to be useful for highlighting the specific embodiment of the preferred system.

### The operation principle of the invention is as in the following:

As given in the examples of the Figure 1 and Figure 2, a spread metal powder layer (11) is present on the ground level of the manufacturing area, in the middle part inside the additive manufacturing cabin (12) with the laser beam based on metal powder spreading. The laser beams provide melting in the geometry determined by focusing on the metal powder layer (11). Meantime, various gasses are formed as smoke as a result of the metal-laser beam interaction. In the blowing system (20), the entry line (31) provides the gas feeding. The exit line (41) provides for the gas to be removed from the cabin (12) in which the production is made and the recirculation in closed cycle again by passing through the filtering system when necessary. The gasses passed filtering enter the cabin (12) from the entry chamber (30) and sent to the filtering system from the exit chamber (40). The gas flow (21) the gas entering the cabin (12) atmosphere from the entry chamber (30) to the exit chamber (40) form needs to be regular and laminar flow. This is obtained by means of the front plate (32) and the intermediate plate (33) in the entry chamber (30) and the impellers (44) in the exit chamber (40) at the same time. In order to provide for the gasses exiting from the entry chamber (30) to exit from all the perforations (34) in the same tier (c) at equal amounts and velocities, partition plates (35) are used in the entry chamber (30). In order to prevent the gas flow (21) from the front plate (32) effecting from the particles in the powder layer (11), perforations (34) having large diameters on the top (b) and small diameters on the bottom (a) take place on the front plate (32). The diameter increase amount of the perforations (34) is applied as the golden ratio. By this means, a gas flow (21) having a lower velocity is obtained from the perforations (34) at the bottom most (a) and closest to the powder layer (11) and a gas flow (21) having a faster velocity from the larger diameter perforations (34) on the top (b). By this means, a higher velocity gas flow (21) is provided at the top most (b) and a masking effect is created. In order to increase the absorption capacity of the exit chamber (40) of the closed cycle blowing system (20), a protrusion (43) is created on the absorption port (45). With the purpose of the gas transfer in the exit chamber (40) to be exactly regular and canalising all of the gasses desired to be removed to the evacuation port (46), an inclined surface (42) is applied to the top of the exit chamber (40) instead of a sharp corner. The inclined surface (42) preferably has a radiussed structure.

## Claims

1. A blowing system (20) comprising an additive manufacturing build chamber (10), an entry chamber (30), an entry line (31), an exit chamber (40), said blowing chamber (20) enabling to remove gasses created during the melting and sintering procedures from the manufacturing area with the help of a gas flow (21) created between said entry chamber (30) which is fed by said entry line (31) and which has a perforated (34) front plate (32) on a blowing port (32a) and a rear plate (36) to which the entry line (31) is connected, and said exit chamber (40) which has an absorption port (45) and which is positioned against the entry chamber (30) in a cabin (12) of said build chamber (10); wherein the entry chamber (30) **comprises** at least one front plate (32) having at least two tiers (c) of said perforations (34) which are positioned on said blowing port (32a) side, which have variable diameters as per the chamber axis (x) and which are parallel to the manufacturing area; and **characterized in that** the exit chamber (40) **comprises** at least one protrusion (43) which is at the top part of the absorption port (45) and formed so as to extend outwards from the absorption port (45), which enables the gasses to be delivered to the exit chamber (40) without them being circulated in the cabin (12).

2. The blowing system (20) according to Claim 1, **wherein** said entry chamber (30) **comprises** at least one intermediate plate (33) which is positioned between the said front plate (32) and the rear plate (36) for preventing the turbulence of the gas flow (21) between the front plate and said intermediate plate; and **wherein** said intermediate plate (33) **comprises** perforations (34) with the same or different diameters and alignment in relation to the front plate (32).

3. The blowing system (20) according to Claim 2, **wherein** the diameters of the perforations (34) at the tiers (c) on said front plate (32) and said intermediate plate (33) increase from the bottom (a) to the top (b).

4. The blowing system (20) according to Claim 3; **wherein** the diameter increase/decrease of the mentioned perforations (34) is according to the golden ratio to provide a lower velocity of gas flow (21) at a distance close to the powder layer (11) and a faster velocity on the top.

## Patentansprüche

1. Blassystem (20), umfassend eine Baukammer (10) zur additiven Fertigung, eine Eintrittskammer (30), eine Eintrittsleitung (31), eine Austrittskammer (40), wobei die Blaskammer (20) es ermöglicht, während der Schmelz- und Sintervorgänge erzeugte Gase aus dem Fertigungsbereich mithilfe eines Gasstroms (21) zu entfernen, der zwischen der Eintrittskammer (30), die durch die Eintrittsleitung (31) gespeist wird und die eine perforierte (34) Frontplatte (32) an einer Blasöffnung (32a) und eine Rückplatte (36) aufweist, mit der die Eintrittsleitung (31) verbunden ist, und der Austrittskammer (40), die eine Absorptionsöffnung (45) aufweist und die gegen die Eintrittskammer (30) in einer Kabine (12) der Baukammer (10) positioniert ist, erzeugt wird; wobei die Eintrittskammer (30) mindestens eine Frontplatte (32) **umfasst,** die mindestens zwei Reihen (c) der Perforationen (34) aufweist, die auf der Seite der Blasöffnung (32a) positioniert sind, die variable Durchmesser gemäß der Kammerachse (x) aufweisen und die parallel zu dem Fertigungsbereich verlaufen; und **dadurch gekennzeichnet, dass** die Austrittskammer (40) mindestens einen Vorsprung (43) **umfasst,** der sich an dem oberen Teil der Absorptionsöffnung (45) befindet und so geformt ist, dass er sich von der Absorptionsöffnung (45) nach außen erstreckt, wodurch es möglich ist, die Gase an die Austrittskammer (40) abzugeben, ohne dass sie in der Kabine (12) umgewälzt werden.

2. Blassystem (20) nach Anspruch 1, **wobei** die Eintrittskammer (30) mindestens eine Zwischenplatte (33) **umfasst,** die zwischen der Frontplatte (32) und der Rückplatte (36) positioniert ist, um die Turbulenz des Gasstroms (21) zwischen der Frontplatte und der Zwischenplatte zu verhindern; und **wobei** die Zwischenplatte (33) Perforationen (34) mit den gleichen oder unterschiedlichen Durchmessern und einer gleichen oder unterschiedlichen Ausrichtung in Bezug auf die Frontplatte (32) **umfasst.**

3. Blassystem (20) nach Anspruch 2, **wobei** die Durchmesser der Perforationen (34) an den Reihen (c) auf der Frontplatte (32) und der Zwischenplatte (33) von der Unterseite (a) zu der Oberseite (b) zunehmen.

4. Blassystem (20) nach Anspruch 3; **wobei** die Zunahme/Abnahme des Durchmessers der erwähnten Perforationen (34) dem goldenen Schnitt entspricht, um eine niedrigere Geschwindigkeit des Gasstroms (21) in einem Abstand nahe der Pulverschicht (11) und eine höhere Geschwindigkeit an der Oberseite bereitzustellen.

## Revendications

1. Système de soufflage (20) comprenant une chambre de construction pour fabrication additive (10), une chambre d'entrée (30), une ligne d'entrée (31), une chambre de sortie (40), ladite chambre de soufflage (20) permettant d'éliminer les gaz créés durant les procédures de fusion et de frittage de la zone de fabrication à l'aide d'un flux de gaz (21) créé entre ladite chambre d'entrée (30) qui est alimentée par ladite ligne d'entrée (31) et qui comporte une plaque avant (32) perforée (34) sur un orifice de soufflage (32a) et une plaque arrière (36) à laquelle la ligne d'entrée (31) est raccordée, et ladite chambre de sortie (40) qui comporte un orifice d'absorption (45) et qui est positionnée contre la chambre d'entrée (30) dans une cabine (12) de ladite chambre de construction (10) ;
ladite chambre d'entrée (30) **comprenant** au moins une plaque avant (32) possédant au moins deux étages (c) desdites perforations (34) qui sont positionnées sur ledit côté de l'orifice de soufflage (32a), qui possèdent des diamètres variables selon l'axe (x) de chambre et qui sont parallèles à la zone de fabrication ; et **caractérisé en ce que** la chambre de sortie (40) **comprend** au moins une saillie (43) qui est au niveau de la partie supérieure de l'orifice d'absorption (45) et formée de façon à s'étendre vers l'extérieur à partir de l'orifice d'absorption (45), qui permet aux gaz d'être délivrés à la chambre de sortie (40) sans qu'ils soient mis en circulation dans la cabine (12).

2. Système de soufflage (20) selon la revendication 1, ladite chambre d'entrée (30)
**comprenant** au moins une plaque intermédiaire (33) qui est positionnée entre ladite plaque avant (32) et la plaque arrière (36) pour empêcher la turbulence du flux de gaz (21) entre la plaque avant et ladite plaque intermédiaire ; et ladite plaque intermédiaire (33) **comprenant** des perforations (34) avec des diamètres identiques ou différents et un alignement par rapport à la plaque avant (32).

3. Système de soufflage (20) selon la revendication 2, lesdits diamètres des perforations (34) au niveau des étages (c) sur ladite plaque avant (32) et ladite plaque intermédiaire (33) augmentant du bas (a) vers le haut (b).

4. Système de soufflage (20) selon la revendication 3 ; ladite augmentation/diminution de diamètre des perforations mentionnées (34) étant selon le nombre d'or pour fournir une vitesse d'écoulement de gaz (21) plus faible à une distance proche de la couche de poudre (11) et une vitesse plus rapide sur le dessus.
